# EUROPEAN PATENT APPLICATION

(11) **EP 4 753 128 A1**
(43) Date of publication of application: **03.06.2026**
(21) Application number: 24315544.7
(22) Date of filing: 02.12.2024
(51) Int. Cl.: H02M 1/088, H02M 1/32, H02M 7/5387

(54) **ELECTRONIC SYSTEM INCLUDING AN INVERTER, COMPRISING SWITCHES IN SERIES FOR DETECTING FAILURE WHEN THEY ARE OPERATING**

(71) Applicant: Watt & Well, 84120 Pertuis (FR)
(72) Inventor: Pagani Pereira, Douglas, 75018 PARIS (FR)
(74) Representative: IXAS Conseil

(57) **Abstract**

The inverter (32) comprises pairs (5, 6; 7, 8) of switches arranged in series on electrical lines (4a, 4b) connecting electrical potentials (2, 3) to a phase line (9) to be supplied by a current formed by incessant switching of the switches. The switches in the pair are redundant to prevent damage caused by a short-circuit in one of the switches, while the other continues to open the line (4), maintaining normal operation. Failure of one switch is detected by a detection circuit while supplying switches of each pair with time offsets.

## Description

### Technical scope of the invention

The invention belongs to the general field of electrical engineering, and more particularly to the field of control of electrical machine. It relates to an electronic system including an inverter, said inverter comprising switches in series for detecting failure in their operation. The invention also relates to an electric machine comprising such an electronic system.

### Technological background

Electronic circuits designed to modify the shape of an electric current, such as inverters creating alternating currents from DC supply currents, typically include at least a switch such as a transistor on each leg of the circuit between one of the input electrical potentials and the phase line where the output current flows. All the switches are constantly switched on and off to give the desired shape to the output current. Switch malfunctions, and in particular short circuits that keep the switches in a closed state regardless of the commands applied to them, must be detected. Known methods consist of continuously measuring the electrical potential difference across the switch, i.e. the drain-source voltage Vds in the case of transistors or carrying out a rapid current measurement on a component external to the circuit. Although reliable in themselves, these procedures must be applied and operated within extremely short timescales, for example a few microseconds, to avoid damaging the devices supplied by the current from the electronic circuit.

### Summary of the invention

The main aim of the invention is to avoid this disadvantage and to make it possible to detect failure in inverters, in particular short-circuits in switches, safely with less time constraint. The invention is essentially based on two features: doubling the number of switches, so as to form pairs of switches, arranged in series, in each electrical leg connecting the input potentials to the phase line; and a special control of the switches in each of the pairs.

The use of several switches in series on each leg avoids current failure on the phase line, and induced damage to downstream devices, should one of the switches short-circuit, as the other switch or switches operating normally would continue to open the leg on which they are located. However, such a precaution is insufficient as another failure may still occur related to the remaining working switches. It is therefore necessary to detect any switch failure despite their redundancy. However, as the operation of the inverter remains normal when a single switch short-circuits, a slower fault detection can be accepted, which is a great advantage. The second essential feature of the invention consists in a special control of the switches of each pair, so as to exploit the redundancy of switches, in order to carry out a reliable failure detection with simple detection means, and still within a short time.

The invention relates to an electronic system including an inverter for supplying an electrical phase line, wherein the inverter comprises an electrical line connecting a first electrical input potential and a second electrical input potential, the phase line in which an output current of the inverter flows and which connects to the electrical line at a point intermediate said electrical potentials thus dividing the electrical line into two different successive portions, characterized in that it comprises, on each of the said portions, a pair of switches; the switches of each of the pairs are arranged in series on the respective portion, wherein both switches of each pair are configured to be opened or closed simultaneously when they are supplied simultaneously, wherein both switches of each pair are configured to be supplied with time offsets, each of the switches of each of the pairs being alternately opened first. The electronic system further comprises a detection circuit for detecting failure of the switches including a switch short-circuit.

The inverter can thus be a half-bridge arrangement, wherein each pair of switches are equivalent to a single switch of a half bridge when the switches of the pair are supplied simultaneously in the same manner. The inverter is equivalent to a half bridge including pairs of switches replacing single switches.

In a particularly envisaged embodiment, the switches are MOSFETs.

In a preferred embodiment, diodes are mounted on the first electrical line parallel to each of the switches, the diodes being mounted with an identical flow direction towards the first electrical potential. If the switches are MOSFETs, said diodes form part of the MOSFET device.

In a first envisaged embodiment, the failure detection circuit comprises, for each pair of switches, a measurement module comprising a voltage comparator, having one input connected to the electrical line of the pair between the switches of the pair, and another input which is preferably connected to a reference electrical potential.

In this embodiment, failure can be detected at a specific time during each half-cycle of inverter sinusoidal output current, and each detection relates to just one of the switches. A failure is preferably detected by detecting a voltage pattern of the failed switch or derived from the failed switch. In a second embodiment, the fault detection circuit comprises, for each of the switches, a measurement module for measuring a voltage across the switches.

An important advantage of this second embodiment and second detection mode is that the fault detections are made at every half-cycle of inverter sinusoidal output current. And each detection relates with a moving time window frame to at least half of the switches and preferably to all the switches. Unlike in the previous mode, a fault detection signal, sensitive to the state of at least half of the switches, preferably all the switches, can be obtained by the fault detection circuit and evaluated to identify a failure on any of the switches.

In a particular mode of failure detection, well suited to this mode of inverter implementation, failure detections are made at a plurality of determined instants included in time windows open in a determined portion of each of the operating half-cycles.

The fault detection circuit is then advantageously configured to make comparisons between a fault detection signal and a normal operating pattern, the fault detection signal being compared with the normal operating pattern at each of the times of said plurality to make each of the comparisons.

More preferably, a fault is detected when a voltage of at least one of the switches remains below a voltage threshold during a time window. According to some additional advantageous and optional features:
- each of the measurement modules comprises an optocoupler to ensure electrical insulation;
- each of the measurement modules comprises a voltage divider bridge and a Schmitt trigger to adapt the voltage in the inverter itself, and its fluctuations, to the voltage in the fault detection circuit;
- the failure detection circuit comprises a fault counter incremented each time an error is detected, reset when no error is detected, and the failure detection circuit issues an error diagnosis when the number of errors recorded by the counter exceeds a limit. Failure detection is rendered more reliable by eliminating the influence of temporary measurement artifacts or transient disturbances;
- the fault detection circuit includes a fault synthesis device, connected to each of the measurement modules and comprising a single output. It is possible to detect a failure of the inverter based on a detection signal from all of the switches, there is no need to process the signals from the switches separately;
- the fault detection circuit comprises Schmitt triggers for each of the measurement modules and emits an output signal taking exclusively a high level and a low level. Such a device enables convenient detection based on the use of logic gates to distinguish between normal and other inverter states.

Another aspect of the invention is a polyphase electric machine, comprising an electric motor, a plurality of inverters and an electronic system as described above, each inverter providing a supply phase for the motor, a control device configured to interrupt the operation of any one of the inverters in the event of a failure indicated by the detection circuit, the supply phases being sufficient in number to enable the electric motor to run with an inverter whose operation has been interrupted by the control device.

In a particular embodiment, the motor will comprise five phases during a normal operation of the electric motor. The electric motor is configured to run with four phases when one of the electrical phases is interrupted and isolated by the control device.

The invention therefore envisages a machine that must continue to operate when one of the phases of its supply current malfunctions and must be isolated from the machine or stopped, which the control device accomplishes. In addition, the number of phases is supernumerary to compensate for the failure of one of them, which leads to the preference for a five-phase supply.

Such a machine will be particularly appreciated in aeronautical or space applications, where reliability requirements are maximum and where repair is difficult or impossible. The machine, and in particular its inverters, will then often be capable of continuing their functioning even in case of switch malfunction; thi will improve the service life of the machine under exposure to harsh external conditions of temperature, temperature cycles and cosmic radiation.

### Brief description of the figures

The aspects, advantages and features of the invention will be better understood with the aid of the detailed description of some of its embodiments, given by way of illustration only:
- Figure 1 is a part view of a first embodiment of an electronic circuit comprising an inverter;
- Figure 2 illustrates switch control;
- Figure 3 is a schematic diagram of the delayed opening of one of the switches of a pair of switches;
- Figure 4 shows an output signal from a detection circuit;
- Figure 5 shows two further output signals from the detection circuit;
- Figure 6 is a general view of a second embodiment of the inverter;
- Figure 7 is a schematic diagram of the environment of the second embodiment;
- Figure 8 illustrates the operating procedure for this embodiment;
- Figure 9 shows a particular circuit of the embodiment;
- Figure 10 shows a time function for triggering the detection process;
- Figure 11 shows failure detection using sliding time windows;
- Figure 12 shows a possible and important application of the invention.

The following reference numbers are used in the figures and in the description:
1 inverter
2,3 first and second electrical potential
4 electrical line
5,6,7,8 switches (5: HH; 6: HL; 7: LH; 8: LL)
9 phase line
10,11 voltage comparators
12 reference voltage line
13,14,15,16 resistors
17 OR gate
18 control device
19,20,21,22 diodes
23,24,25,26 time function
27 synchronization signal
28,29 function representing voltage difference
32 inverter
33,34,35,36 voltage comparators
37 OR gate
38 comparator
39 time window generator
40 fault counter
42,43 AND gates
44 OR gate
45 pulse
46 time window
47 signal
48 DC power supply
50 inverter device
51 electric motor
52 control module
53,54 Schmitt trigger
55 failure detection circuit
57 detection circuit
58 electrical machine
59 optocoupler

### Detailed description of the invention

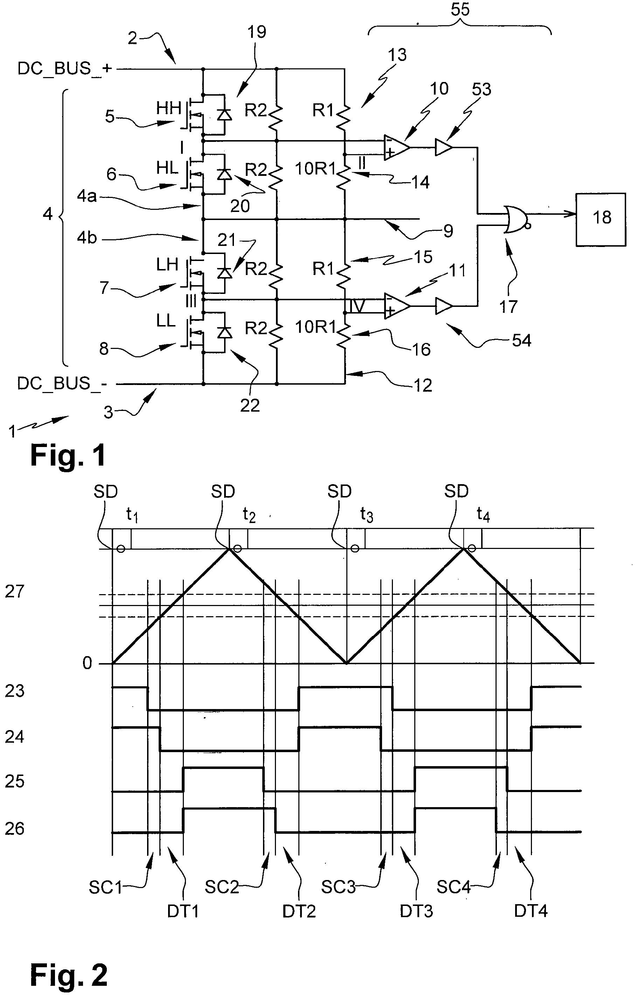

Figure 1 illustrates an electronic circuit according to a first embodiment of the invention. The electronic circuit comprises an inverter 1 which is arranged between a first electrical potential 2 and a second electrical potential 3, which is lower than the first. It comprises an electrical line 4 connecting the first and second electrical potentials 2 and 3, along which the sources and drains of four switches 5 to 8 are placed. These switches are named successively, from the first electrical potential 2, HH for switch 5, HL for 6, LH for 7 and LL for 8. A phase line 9 is connected to the electrical line 4 and transmits an electric current transformed by the inverter 1 to another device, such as an electric motor, to power it. On either side of the connection to phase line 9, the electrical line 4 consists of two different successive portions 4a and 4b, each of which carries a pair of switches, respectively 5 and 6 (HH and HL), and 7 and 8 (LH and LL). Inverter 1 also includes two measurement modules, which are voltage comparators 10 and 11, the first of which has a negative input connected to electrical line 4 between switch 5 and switch 6, and a positive input connected to a reference voltage line 12. The second voltage comparator 11 has a negative input connected to electrical line 4 between switch 7 and switch 8, and a positive input connected to the reference voltage line 12. The reference voltage line 12 comprises, from the first electrical potential 2 to the second electrical potential 3, four successive resistors 13, 14, 15 and 16, the extreme resistors 13 and 15 having a much lower value R1 than the central resistors 14 and 16 (whose value can be 10xR1). The positive inputs of voltage comparators 10 and 11 connect to reference voltage line 12 between the first two resistors 13 and 14, and between the last two resistors 15 and 16 respectively. Phase line 9 connects to reference voltage line 12 between center resistors 14 and 15, and to electrical line 4 between switch 6 and switch 7.

The inverter 1 also includes an OR gate 17 with two inputs respectively connected to the outputs of the voltage comparators 10 and 11 via a respective Schmitt trigger 53 or 54, whose output is connected to a control device 18 of the electronic circuit 1; the voltage comparators 10 and 11, the Schmitt triggers 53 and 54 and the OR gate 17 make up a failure detection circuit 55 used by the control device 18. Finally, the inverter 1 includes four diodes 19, 20, 21 and 22 located on branches of the power line 4 which bypass the switches 5 to 8 respectively. The direction of passage of all diodes 19 to 22 is towards the first electrical potential 2.

The inverter 1 thus has an almost symmetrical arrangement corresponding to a half-bridge assembly, also known as h-bridge. More precisely, the pair of switches 5, 6 replaces a single switch of a H-Bridge and the pair of switches 7, 8 replaces a single switch of H-bridge. All switches 5, 6, 7, 8 are preferably identical. All diodes 19, 20, 21, 22 are preferably identical. The invention could be applied to other devices, such as a full bridge circuit. Each of switches 5, 6, 7, 8 and said diodes can be replaced by a MOSFET, each of which will then incorporate the function of the corresponding diode 19, 20, 21, 22. In the remainder of this description we will assume that MOSFETs are used, which is a preferred embodiment of the invention. However, the present invention can also be carried out by using other types of switches and diodes.

The operating mode of electronic circuit 1 will now be described. Figure 2 illustrates the control of switches 5 to 8 during two complete operating cycles of inverter 1 by means of respective time functions (23 for 5 or HH, 24 for 6 or HL, 25 for 7 or LH and 26 for 8 or LL), where the high level represents the closing of the MOSFET concerned, and the low level its opening. At the start of this representation, HH and HL are closed, so electric current flows from the first electric potential 2 to the phase line 9, while LH and LL are open, thus cutting the electrical line 4 between the phase line 9 and the second electrical potential 3. HH and HL are then opened but, according to a first feature of the invention, with a time lag SC1, HH being open first. After a dead time DT1 when the MOSFETs are all open, LH and LL are closed, and phase line 9 is set to the second electrical potential 3. A time offset SC2 is then again applied to the opening of LH and LL, with LH being opened first. After a further dead time DT2, HH and HL are closed again and a new operating cycle begins. However, according to a second feature of operation according to the invention, it is then HL that is opened before HH, with a time lag SC3. Finally, LH and LL are closed after a further dead time DT3, then successively opened with a time lag SC4, LL now being opened first. After another dead time DT4, HH and HL are closed again, and operation as described above recommences for the duration of the service of inverter 1. A detection cycle on all switches 5 to 8 therefore spans two operating cycles of electronic circuit 1. The time shifts SC are equal to each other, as are the dead times DT.

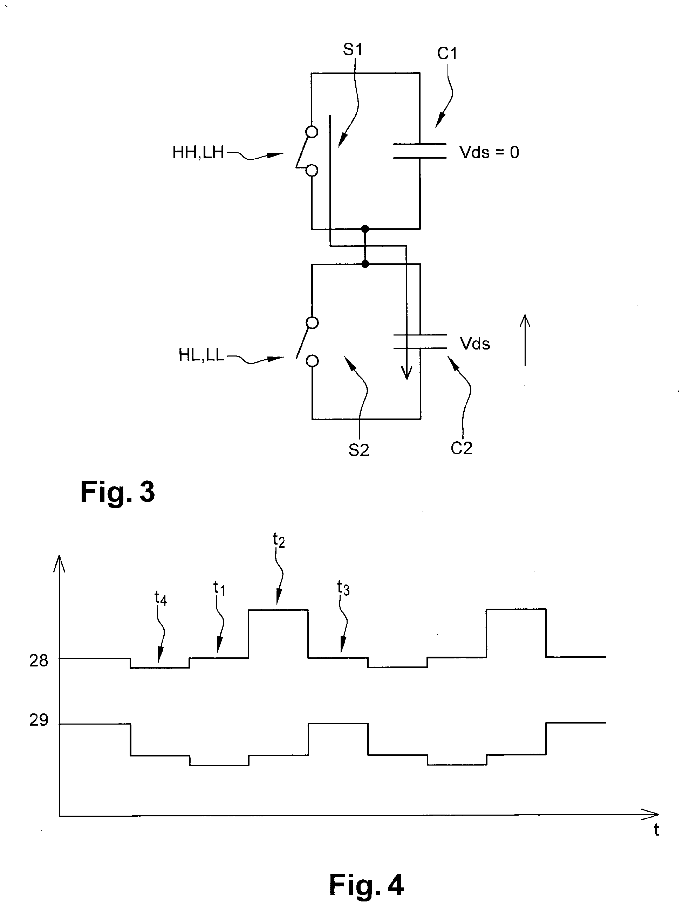

The effect of the SC opening time shifts of switches 5 to 8 is as follows. A MOSFET has a drain-source capacitance and can be modeled as shown in Figure 3, with a pure switch part S1 or S2 and a capacitor C1 or C2 in parallel. When only one in a pair of MOSFETs in series is closed, for example the MOSFET with S1, its drain-source voltage is zero, while a current flows in the direction of the arrow to raise the voltage across the still open MOSFET to a value Vds as a function of its capacitance C2. This is true whichever MOSFET is open. And if the closed MOSFET is subsequently opened, its drain-source voltage remains zero and does not affect the voltage Vds across the capacitance C2 of the MOSFET opened first, which can therefore be measured by the voltage comparator 10 or 11 associated with the MOSFET pair in the manner to be described. However, if the MOSFET assumed to be open first (that of S2 and C2) fails to short-circuit, and is therefore in reality always closed, a zero voltage will be detected by the voltage comparator 10 or 11, and a failure signal will be transmitted to the control device 18, which will take the necessary measures to protect the electrical installation, for example by isolating the faulty inverter 1 or rendering it inactive.

The upper part of figure 2 illustrates a synchronization signal 27 from the inverter 1. This synchronization signal is a Pulse Width Modulation carrier. It determines the opening and closing instants of switches 5 to 8 It is generated by a counter of control device 18, and has the shape of saw teeth whose highest and lowest points correspond to the centers of the opening or closing periods of switches 5 to 8. A duration corresponding to a sampling delay SD is counted after each highest or lowest point and defines a sampling instant of one of the switches 5 to 8, precisely the switch which was opened first during the previous SC and which was therefore able to charge to the voltage Vds. Here, HH is sampled at t₂, LH at t₃, HL at t₄ and LL at t₁.

Sampling is carried out in the following way, which will only be developed for HH and time t₂ since it is identical for the others. When HH opens, the voltage across HH rises to Vds and brings the potential difference between the inputs of voltage comparator 10 to a higher value. Function 28 in Fig. 4, which represents the voltage difference at the inputs of voltage comparator 10, therefore registers a positive output at time t₂. Schmitt trigger 53 goes high and sends a signal corresponding to logic state 1 to OR gate 17.

With the HH and HL of the MOSFET pair closed at sampling times t₁ and t₃, function 28 is stable at a value corresponding to a low logic state. And at time t4, corresponding to HL opening before HH, the negative input of voltage comparator 10 is raised to a higher voltage, and voltage comparator 10 therefore registers a negative output, i.e. a decreased voltage, below the value it measures at times t₁ and t₃. Schmitt trigger 53 is thus set low at t₃, t₄ and t₁, and sends a signal corresponding to logic state 0 to OR gate 17.

Function 29, also shown in Fig. 4, corresponds to the voltage difference at the inputs of detection circuit 11 assigned to the MOSFETs of the other pair, LH and LL. In principle, it is similar to function 28 with a time shift, the large positive gain being at time t₃, and the small negative gain at time t₁.

Functions 28 and 29 therefore lend themselves well to conversions to Boolean logic values, which facilitate fault detection by comparison with a normal operating scheme. Thus, the correct operation of inverter 1 is defined by Table 1:

| Table 1 | t₁ | t₂ | t₃ | t₄ |
|---|---|---|---|---|
| Iph≥0 | x | 1 | x | 0 |
| Iph≤0 | 0 | x | 1 | x |

where 1 corresponds to positive-gain states, 0 to negative-gain states, Iph to the direction of current in phase line 9, and x to no detection by the voltage comparator 10 or 11 in question (10 for Iph≥0, and 11 for Iph≤0).

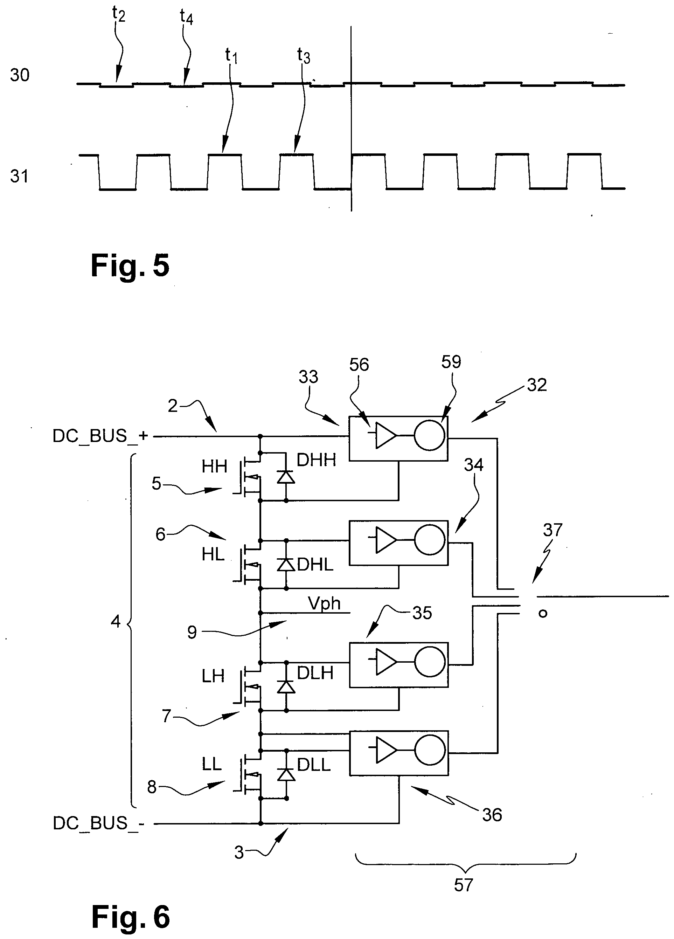

Table 1 therefore defines a normal operating scheme, which the measurements conform to only in the absence of a failure. If, for example, one of switches 5 to 8 is short-circuited, which corresponds to permanent closure, function 30 is obtained at voltage comparator 10 in the case of switch 5 (HH), and function 31 (Figure 5) in the case of switch 6 (HL). More generally, Table 2 lists the operating patterns detected when one of switches 5 to 8 is short-circuited.

| Table 2 | t₁ | t₂ | t₃ | t₄ | Failure |
|---|---|---|---|---|---|
| Iph≥0 | x | 0 | x | 0 | HH short-circuited |
| Iph≥0 | x | 1 | x | 1 | HL short-circuited |
| Iph≤0 | 0 | x | 0 | X | LH short-circuited |
| Iph≤0 | 1 | x | 1 | X | LL short-circuited |

Other fault conditions may also be detected by the device. In all cases, the inverter 1 will be stopped or isolated. Advantageously, the decision will be taken only if the failure persists for several consecutive detection cycles.

In a concrete embodiment of the invention, where an operating cycle (corresponding to a rise and fall of the synchronization signal 27) lasted 25.6µs, the values SC = 200ns, DT= 300ns and SD = 160ns had been chosen.

However, this first embodiment is sensitive to the direction of the current in phase line 9 for the following reasons, which explain the lack of detection represented by the x states. Diodes 19 to 22 mounted antiparallel to switches 5 to 8 are able to let current flow through them from the power line 4, depending on the positive or negative value of Iph, and current does flow through them during dead times DT, when all switches 5 to 8 are open. Specifically, current flows through diodes 21 and 22 associated with LH and LL when Iph is positive, and through diodes 19 and 20 associated with HH and HL when Iph is negative. But when one of these diodes allows current to flow, the MOSFET to which it is connected cannot be maintained at the detection voltage Vds. It therefore escapes detection, which is only possible during half of the operating cycles for each of switches 5 to 8 by the associated voltage comparator 10 or 11, while the other voltage comparator is not operated.

A second embodiment of the invention will now be described in relation with Figure 6. It avoids this disadvantage and enables all switches 5 to 8 to be controlled simultaneously, while retaining the same staggered opening arrangement of switches 5 and 6, or 7 and 8, of each pair.

The inverter is now numbered 32 and comprises several components similar to those of the previous electronic circuit 1, including switches 5, 6, 7 and 8, which are still MOSFETs and arranged in the same way. However, the measurement modules consisting of the two voltage comparators 10 and 11 are replaced by four voltage comparators 33, 34, 35 and 36, each assigned to one of the switches 5 to 8 and having two inputs connected to the terminals of the respective switch 5 to 8, and an output connected to a respective input of an OR gate 37. Voltage comparators 33 to 36 each feature a Schmitt trigger 56. Together with the OR gate 37, they form a detection circuit 57 which, like the previous one, provides information to the control device 18. In this embodiment, the measurements therefore relate to the voltages across switches 5 to 8, rather than to comparisons between intermediate voltages at the switches and reference voltages. In addition, the voltage comparators 33 to 36 each include an optocoupler 59 which enables reduced voltages to be transmitted to the rest of the detection circuit 57 compared with those in the active parts of the inverter, between the electrical potentials 2 and 3, eliminating fluctuations in these voltages and thus maintaining reliable detection; the optocoupler 59 ensures electrical insulation, too.

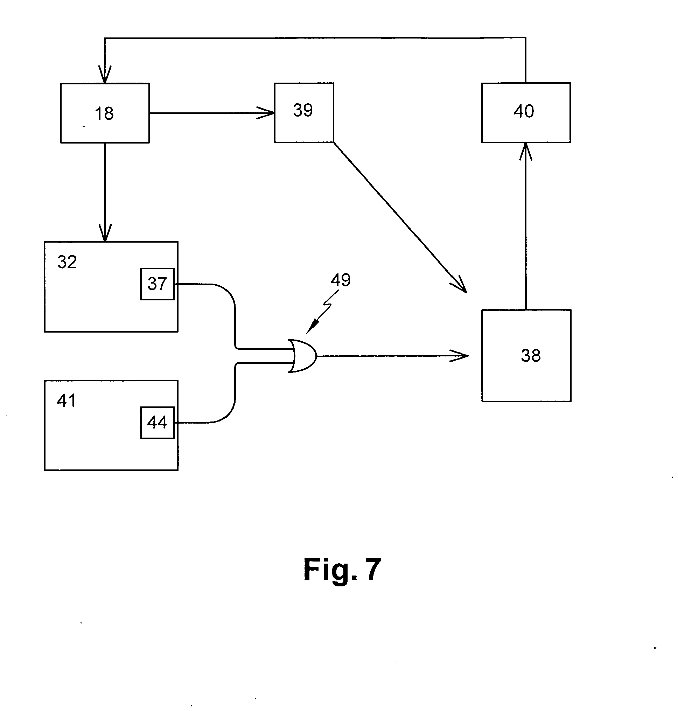

A schematic of the environment of inverter 32 is shown in Figure 7. The output of the OR gate 49 is connected to a comparator circuit 38. The control device 18 is also able to trigger the operation of a time window generator 39. When a time window is generated by a watchdog, it is transmitted to another input of comparator circuit 38, which then acts on a fault counter 40. When a permissible fault limit is reached, the fault counter 40 communicates a corresponding diagnosis to the control device 18, which then isolates or shuts down the inverter 32. (In a variant of this embodiment, which does not modify its functioning, the comparator circuit 38, the time window generator 39 and the fault counter 40 can be arranged in the same physical unit (i.e. in the same device) as the control device 18.)

This embodiment is based on the observation that switches such as series MOSFETs, placed in parallel with diodes such as the diodes 19 to 22 still present in this embodiment, have approximately identical drain-source voltages Vds when open, thanks to their capacitance. If, for example, HH and HL are open, the voltages across HH and HL will be close to VH/2, where VH is the voltage between the first electrical potential 2 and the phase line 9. And if HL is then opened first, in accordance with the operating rules in Figure 2, which also apply to this embodiment, the voltage across HH rises above VH/2 until it opens in turn.

This rise can be detected by the relevant detection circuit (33 for HH), if, for example, it is fitted with a Schmitt trigger which detects the temporary rise in voltage across the switch above VH/4. If the relevant detection circuit detects a rise above VH/4 then its output is a logic 0. If the rise is not detected during a given number of PWM cyles (six in this case) then its output is a logic 1.

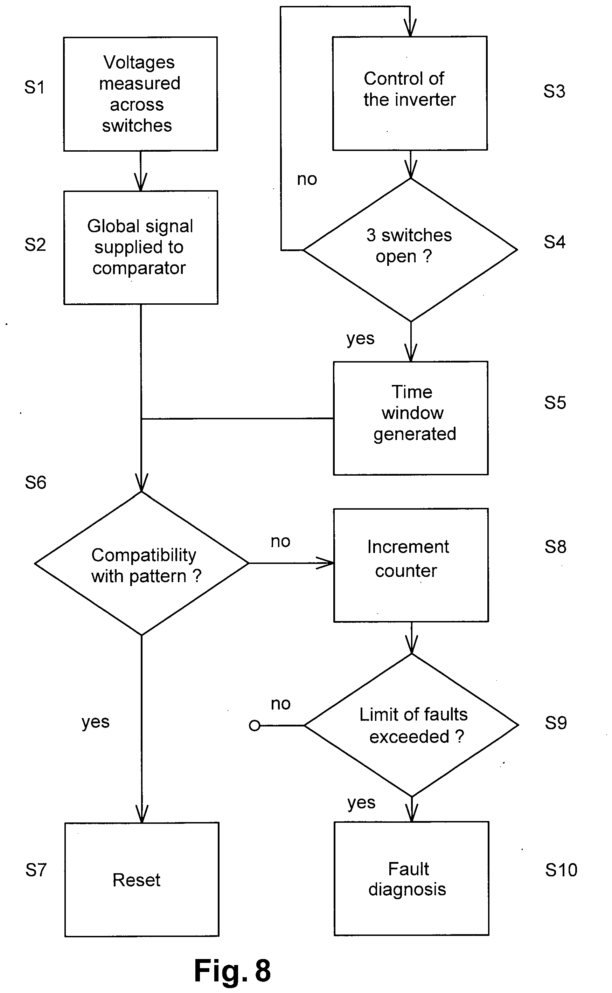

The process will be explained by means of figure 8. Detection circuits 33, 34, 35 and 36 take measurements of the voltages across switches 5 to 8 at high frequency (step S1), supply individual signals to OR gate 37, which, after an OR operation with the output of gate 44, supplies a global signal to comparator 38 (S2). These signals are in a low or high state, corresponding to logic values 0 or 1, after having been processed by the Schmitt triggers 56. The control device 18 simultaneously controls the operation of the electronic circuit 32 (S3) by commanding the openings and closings of switches 5 to 8, and indicates to the time window generator 39 the opening instants of three of the switches 5 to 8, the fourth remaining closed (at the beginning of durations SC1 to SC4 in Figure 2) (S4). The time window generator 39 then delivers a time window to comparator 38 (S5), which determines during this window whether the overall signal is compatible with a recorded normal operating pattern (S6). If this is the case, the fault counter 40 is reset to zero (S7) and operation continues; if not, the fault counter 40 is incremented by one (S8), and if a limit on the number of faults is then exceeded (S9), a fault diagnosis is issued (S10) and a decision to shut down the inverter 32, for example, is taken.

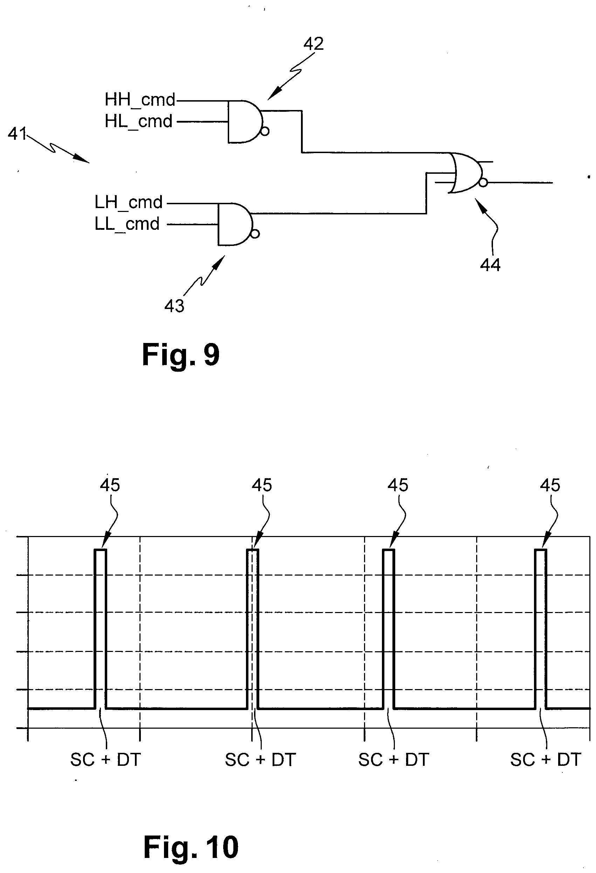

The signal supplied to the time window generator 39 can be provided by the circuit 41 shown in Figure 9. The "cmd" (for command) control signals from switches 5 to 8 are transmitted to two AND gates 42 and 43, one of which receives the control signals from HH and HL, and the other the control signals from LH and LL. Logic value 1 corresponds to the closed state, and 0 to the open state. The negative OR gate (NOR) 44, which receives the AND gate outputs 42 and 43, supplies a high "1" signal as soon as three of the switches 5 to 8 are open. This signal, shown in Figure 10, corresponds to regular pulses 45, each of which corresponds to a total duration (SC + DT) until the switches of the other pair reopen.

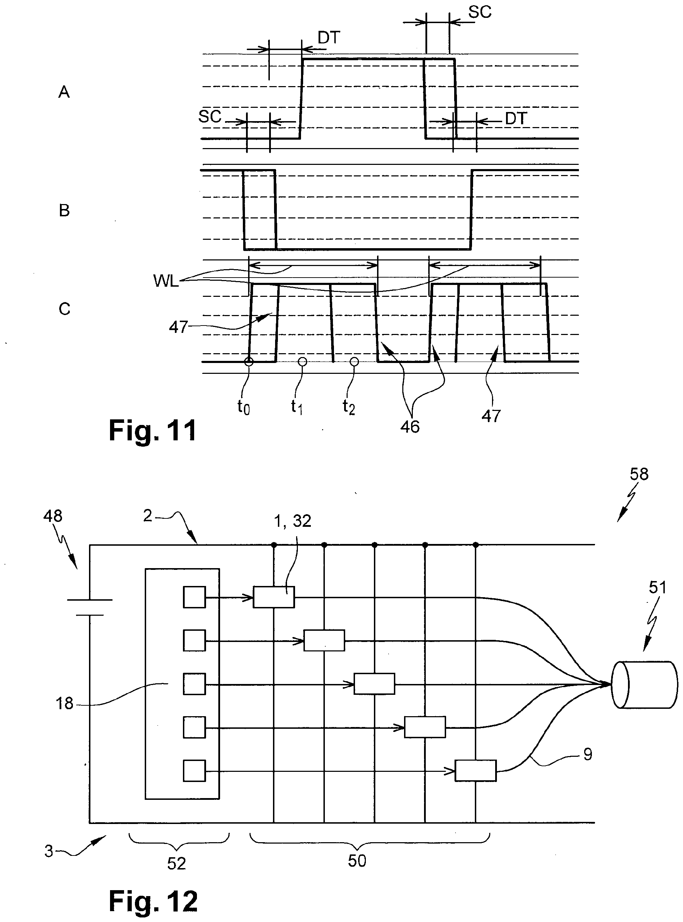

We now turn to figure 11. Parts A and B illustrate the operations of the switch pairs, while part C illustrates the failure detections. The time window generator 39 supplies a time window 46 to the comparator 38 as soon as it receives one of the pulses 45. The window 46 has a fixed, invariable duration, and can start as soon as the third switch is opened, thus possibly encompassing a full SC duration, a full DT duration, and extending after the switches of the other pair are reopened. In one embodiment, SC = 200ns, DT = 200ns, and the window length is WL = 900ns. The overall signal has reference 47. It is at a high level in part of window 46. Diagnosis of a failure then depends on a comparison of the global signal 47 with a normal operating pattern, according to rules which may consist of, among many other possibilities:
- the global signal 47 must be low at the beginning of each window 46 (t₀);
- it must be at the high level after a specified elapsed time (at t₁ = t₀ + 250ns in the example);
- it must return to the low level after a further specified elapsed time (at t₂ = t₀ + 500ns in this example);
- and it must remain at the low level until the end of window 46.

If all these conditions are met, the inverter 32 is considered healthy, and the comparator 38 resets the fault counter 40 to zero. Otherwise, a failure is detected, and the comparator 38 increments the failure counter 40 by one. The failure counter 40 is designed to issue a failure diagnosis only when its count exceeds a limit, i.e. if the failure persists and is detected with a sufficient number of repetitions, which may extend over 8 to 12 operating cycles. It should be emphasized that failure originating from all switches can modify the global signal 47 during any window 46 and be detected, which explains why this second mode of implementation is likely to enable faster detections.

A possible application of the invention is an electrical machine 58 comprising an electric motor 51 associated with the devices previously described, according to the illustration in figure 12. A DC power supply 48 is connected to the first electrical potential 2 and to the second electrical potential 3. An inverter device 50 comprises as many inverters 1 or 32 as there are electrical phases driving the electric motor 51. The control device 18 comprises as many control modules 52 as there are phases, and these control modules 52 each supply the synchronization signal 27 to one of the inverters 1 or 32, with the necessary phase shift. The electric motor 51 can advantageously have, with the invention, a number of phases supernumerary to good operation (five for example), which enables it to continue its activity even when the control device 18 has been obliged to remove a phase following a failure in its electronic circuit. The invention will therefore be particularly appreciated in situations where electrical machines are required to have a long service life under difficult conditions and without the possibility of manual repair, such as aeronautical or space applications.

## Claims

1. An electronic system including an inverter (1, 32) for supplying an electrical phase line (9), wherein the inverter (1, 32) comprises an electrical line (4) connecting a first and a second input electrical potential (2, 3), the phase line (9) through which an output current of the inverter flows and which connects to the electrical line at a point intermediate said electrical potentials, thus dividing the electrical line (4) into two different portions (4a; 4b), **characterized in that** the electronic system comprises, on each of said portions, a pair of switches (5, 6; 7, 8), wherein the switches of each of the pairs are arranged in series on the respective portion, wherein both switches (5, 6; 7, 8) of each pair are configured to be opened or closed simultaneously when they are supplied simultaneously, wherein both switches (5, 6; 7, 8) of each pair are configured to be supplied with time offsets, each of the switches of each of the pairs being alternately opened first, and **in that** the electronic system further comprises a fault detection circuit (55, 57) for detecting a failure including a switch short-circuit.

2. Electronic system according to claim 1, wherein the inverter (1, 32) is a half-bridge arrangement wherein each pair of switches are equivalent to a single switch of a half bridge when the switches of the pair are supplied simultaneously in the same manner.

3. Electronic system according to any one of claims 1 or 2, wherein the switches include MOSFETs, and/or wherein diodes (19, 20, 21, 22) are connected on the electrical line (4) parallel to each of the switches (5, 6, 7, 8), the diodes being connected with an identical flow direction towards the first electrical potential (2).

4. Electronic system according to any one of claims 1 to 3, wherein the fault detection circuit (55) comprises, for each pair of switches, a measurement module comprising a voltage comparator (10, 11), having one input connected to the electrical line of the pair between the switches of the pair, and preferably another input connected to a reference electrical potential.

5. Electronic system according to claim 4, wherein the failure detections are made at a specific time during each half-cycle of inverter sinusoidal output current, and each detection relates to a failure of one of the switches of the electric system . and preferably by detecting a voltage pattern from the failed switch.

6. Electronic system according to any one of claims 1 to 3, wherein the fault detection circuit (57) comprises, for each of the switches, a measurement module (33, 34, 35, 36) for measuring a voltage across the switches.

7. Electronic system according to claim 6, wherein the failure detections are made at every half-cycle of inverter sinusoidal output current, and each detection concerns at least half the switches and preferably all of the switches.

8. Electronic system according to claim 7, wherein the failure detections are made at a plurality of determined instants included in time windows (46) open in a determined portion of each of the operating half-cycles.

9. Electronic system according to claim 8, wherein the fault detection circuit is configured to make comparisons between a fault detection signal and a normal operating pattern, wherein the fault detection signal is compared with the normal operating pattern at each of the times of said plurality for making each of the comparisons, and/or wherein a fault is detected when a voltage of at least one of the switches remains below a voltage threshold during a time window (46).

10. Electronic system according to any one of claims 6 to 9, wherein each of the measurement modules comprises an optocoupler (59).

11. Electronic system according to any one of claims 6 to 10, wherein the fault detection circuit comprises a fault counter (40), incremented each time a fault is detected, reset when no fault is detected, and wherein the fault detection circuit issues a fault diagnosis when the number of faults recorded by the counter exceeds a limit.

12. Electronic system according to any one of claims 4 to 11, wherein the fault detection circuit comprises a fault synthesis device (17, 37), connected to each of the measurement modules and comprising a single output.

13. Electronic system according to any one of claims 4 to 12, wherein the fault detection circuit (55, 57) comprises Schmitt triggers for each of the measurement modules, and emits an output signal taking exclusively a high level and a low level.

14. Polyphase electric machine (58), comprising an electric motor, a plurality of inverters and an electronic system according to any one of claim 1 to 13, each of said inverters providing a supply phase for the motor, and a control device (18) configured to interrupt the operation of any one of the inverters in the event of a failure indicated by the detection circuit.

15. Polyphase electric machine according to claim 14, **characterized in that** it comprises five phases during normal operation, and **in that** it is configured to operate with four phases when one of said five phases is interrupted and isolated by said control device.
